# EUROPEAN PATENT APPLICATION

(11) **EP 4 063 050 A1**
(43) Date of publication of application: **28.09.2022**
(21) Application number: 22163070.0
(22) Date of filing: 18.03.2022
(51) Int. Cl.: B23B 41/02, B23B 29/02

(54) **DEEP HOLE DRILLING SYSTEM WITH THREE-DIMENSIONAL VIBRATION DAMPING FUNCTION USING TOOL STIFFNESS CONTROL**

(30) Priority: 23.03.2021 KR 20210037289
(71) Applicant: Korea Institute of Machinery & Materials, Daejeon 34103 (KR)
(72) Inventor: KIM, Dong Hoon, 109-1501 33, Gwanjeojung-ro, Seo-gu, Daejeon (KR); SONG, Joon Yub, 913-1603 26, Sangdaenam-ro, Yuseong-gu, Daejeon (KR); RO, Seung Kook, 109-706 57, Eoeun-ro, Yuseong-gu, Daejeon (KR)
(74) Representative: Pfenning, Meinig & Partner mbB

(57) **Abstract**

The present disclosure relates to a deep hole drilling system (1000) which processes a deep hole having a depth 10 times to 150 times or more greater than a diameter of the hole, and more particularly to a deep hole drilling system which is equipped with a stiffness control means (D) capable of controlling the stiffness of a drill such that axial and radial vibrations of the drill are reduced, so that the deep hole drilling system has a high machinability, a precise and accurate straightness, and roundness.

## Description

### BACKGROUND

### Field

The present disclosure relates to a deep hole drilling system which machines a deep hole having a depth 10 times to 150 times or more greater than a diameter of the hole, and more particularly to a deep hole drilling system which is equipped with a stiffness control means capable of controlling the stiffness of a drill such that axial and radial vibrations of the drill are reduced, so that the deep hole drilling system has a high machinability, a precise and accurate straightness, and roundness.

### Description of the Related Art

There are various industrial fields that perform deep hole drilling such as from general machinery manufacturing to airline industry, shipbuilding industry, heavy industry, defense industry and energy industry. In particular, the deep hole drilling is an essential process for manufacturing high value-added products and is expected to have increasing demand therefor in the future.

In particular, in order to machine a gun barrel of a defense product, a rotor shaft of wind power generator, a variable propeller screw shaft of a high-speed boat, and a rotor shaft of a power generation equipment, etc., an equipment capable of drilling and honing up to a maximum diameter of 350 mm and a length of 6 m or more is required. However, currently, more than 50 % of the equipment is being imported from Europe (Germany, Italy), Japan, and the United States, etc.

A deep hole drilling machine is necessarily used in the manufacture of large parts in a defense industry, a wind power industry, a shipbuilding industry, and a machinery industry, and is classified as a strategic material. Therefore, the deep hole drilling machine may have difficulties in supply and demand depending on changes in foreign trade policy, and a localization technology for the deep hole drilling machine is required for industrial security.

Therefore, in deep hole machining, there are requirements for a tool monitoring technology which prevents in advance product defects due to wear, damage, etc., of a tool and obtains high quality, an advanced machining technology which obtains information by scanning in advance and then reflects the information in the next machining, and a smart cutting oil supply system technology, etc.

In the past, a technique for suppressing axial vibration during the deep hole drilling has been already known.

There is no known a technology for damping vibration acting in the radial direction of the drill. There is a publicly-known technology for three-dimensionally reducing the vibration applied to the drill by providing a vibration reducing means on a body which indirectly rotates the drill. However, the greater the drilling depth, the lower the vibration damping efficiency.

### PRIOR ART DOCUMENT

### Patent Document

(Patent Document 1) Korean Patent Application Laid-Open Publication No. 10-2018-0053330 (May 21st, 2018)

### SUMMARY

### Technical Problem

The present invention is designed to solve the above problems, and the purpose of the present invention is to provide a deep hole drilling system which has a three-dimensional vibration damping function using stiffness control of a tool including a drill stiffness control means capable of damping vibration generated in the axial and radial directions of the drill on a deep hole drill.

Also, the stiffness control means of the present invention controls the stiffness of the drill by controlling the viscosity of MR fluid. The deep hole drilling system has a three-dimensional vibration damping function using stiffness control of a tool which is capable of more precisely damping the vibration by controlling the viscosity of the MR fluid by feeding back a vibration signal through an acceleration sensor provided in the drill.

Also, the purpose of the present invention is to provide the deep hole drilling system that has a three-dimensional vibration damping function using stiffness control of a tool which divides a plurality of MR fluid storage spaces along the axial direction and controls the stiffness of the drill by independently controlling the viscosity of the MR fluid for each storage space.

### Technical Solution

One embodiment is a deep hole drilling system in which a drill head which machines a workpiece by a rotational friction force is formed at a front end thereof and a drill body having a predetermined length along an axial direction is formed at a rear end thereof. The deep hole drilling system has a three-dimensional vibration damping function using stiffness control of a tool and includes: a vibration detection sensor which is provided on the drill body and detects vibration of the drill head; a stiffness controller which is provided on the drill body, controls stiffness of the drill body, and thus, damps the vibration; and a controller which receives a vibration signal of the vibration detection sensor, transmits a stiffness control signal corresponding to the vibration signal to the stiffness controller, and varies a strength of the stiffness controller.

The stiffness controller is formed in a cylindrical shape which has a predetermined length along the axial direction and a predetermined thickness along a radial direction, and surrounds an outer surface of the drill body. The drill body includes a stiffness control coupling portion being formed to be recessed radially inwardly from the outer surface of the drill body lest an outer surface of the stiffness controller should protrude outward from the outer surface of the drill body and having a length corresponding to the stiffness controller and a thickness corresponding to the stiffness controller.

The stiffness controller includes: an MR chamber which is disposed radially inward and in which a MR fluid (MR) is stored; a bobbin which is disposed on a radially outer side of the MR chamber; and a coil which is wound around the bobbin in order to control a viscosity of the MR fluid (MR). The controller controls stiffness of the stiffness controller by controlling an intensity of a current applied to the coil.

The stiffness controller includes at least one first partition wall is formed such that the MR chamber is divided into a plurality of MR chamber spaces along the axial direction.

The coil is divided into a plurality of coils in such a way as to correspond to the MR chamber spaces, respectively, and each of the coils is independently controlled by the controller.

The MR chamber includes at least one baffle which is formed along the axial direction, of which axial one side or the other side is coupled to the MR chamber or the first partition wall, and of which the other side is spaced apart from the MR chamber or the first partition wall.

A plurality of the baffles are disposed to be spaced apart from each other in the radial direction. When a space is formed on the other side of one of the baffles in the axial direction, another adjacent baffle is formed to alternate with each other such that a space is formed on one side in the axial direction.

The MR chamber includes a second partition wall which is formed along the axial direction such that the MR chamber space is divided into a plurality of MR chamber spaces along the radial direction. At least one flow hole is formed on the second partition wall.

The system further includes a transmitter which transmits the vibration signal of the vibration detection sensor to the controller and transmits the stiffness control signal of the controller to the stiffness controller.

The controller is disposed on an outside of the rotating drill body. The transmitter includes a slip ring which connects the stiffness controller and the vibration detection sensor provided on the rotating drill body, and a fixed controller.

The controller is disposed on an outside of the rotating drill body. The transmitter includes a wireless transmission module connecting the stiffness controller and the vibration detection sensor provided on the rotating drill body, and a fixed controller, and includes a first transmitter which is provided on the drill body and rotates together with the drill body, and a second transmitter which is disposed close to the first transmitter and wirelessly communicates with the first transmitter.

In the MR chamber space, the MR chamber space disposed at the rear end has a smaller volume than that of the MR chamber space disposed at the front end.

The stiffness controller is disposed on a front side of the drill body.

The drill body includes a hollow portion formed therein along the axial direction so as to supply cutting oil to the drill head and discharge chips generated between the drill head and a workpiece, so that flow paths are formed therein respectively.

### Advantageous Effects

The deep hole drilling system which has a three-dimensional vibration damping function using stiffness control of a tool according to the configuration as described above damps the vibration generated in the drill through the stiffness control of the drill, so that the vibration can be damped in the radius direction as well as in the axial direction of the drill.

Also, as the stiffness control means is provided adjacent to the end of the deep hole drill, there is an effect that efficient vibration damping is possible regardless of the drilling depth.

Also, since the vibration generated in the drill is fed back through an acceleration sensor and the stiffness of the drill is controlled through the viscosity control of the MR fluid, precise vibration damping is possible, and thus, the precision of a machining portion is improved, resulting in excellent surface roughness and tolerance precision of the workpiece.

Also, the stiffness control means by the MR fluid is configured to surround the deep hole drill in the circumferential direction, thereby reducing the axial vibration of the drill and reducing even the radial vibration.

Also, by arranging a plurality of MR fluid storage spaces along the axial direction and by independently controlling the viscosity of the MR fluid arranged in each storage space in accordance with the characteristics of vibration, the vibration damping efficiency is further improved.

### BRIEF DESCRIPTION OF THE DRAWINGS

Fig. 1 is a cross sectional view of a deep hole drilling system according to a first embodiment of the present invention;
Fig. 2 is a cross sectional view of a deep hole drilling system according to a second embodiment of the present invention;
Fig. 3 is a block diagram showing signal lines of the deep hole drilling system according to the embodiment of the present invention;
Fig. 4 is a schematic cross-sectional view of a stiffness controller according to the first embodiment of the present invention;
Fig. 5 is a partially sectional view of the deep hole drilling system in a radial direction thereof according to the embodiment of the present invention;
Fig. 6 is a schematic cross-sectional view of the stiffness controller according to the second embodiment of the present invention;
Fig. 7 is a schematic cross-sectional view of the stiffness controller according to a third embodiment of the present invention; and
Fig. 8 is a schematic cross-sectional view of the stiffness controller according to a fourth embodiment of the present invention.

### DETAILED DESCRIPTION

Hereinafter, an embodiment of the present invention will be described in detail with reference to the drawings.

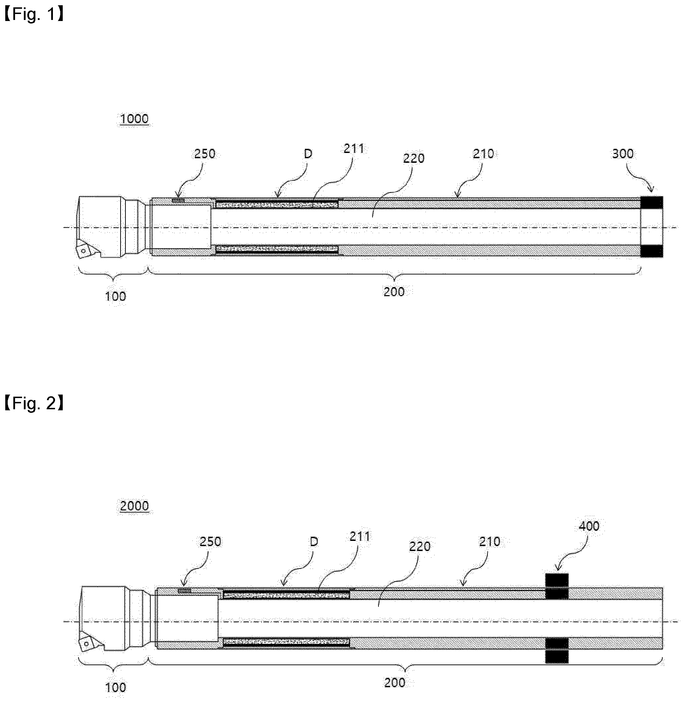

Fig. 1 is a cross-sectional view of a deep hole drilling system 1000 (hereinafter, referred to as deep hole drill) having a three-dimensional vibration damping function using stiffness control of a tool in accordance with a first embodiment of the present invention. As shown, the deep hole drill 1000 includes a drill head 100 which comes in contact with a workpiece and machines the workpiece by a rotational friction force, a drill body 200 which is coupled to a rear end of the drill head 100 to support the drill head 100, and a stiffness controller D which is provided on the drill body 200 and damps the axial and radial vibrations applied to the drill head 100 and the drill body 200. A signal transmitter 300 is included at the rear end of the drill body 200. The signal transmitter 300 transmits a vibration information signal of the drill head 100 to a controller (not shown) and transmits a driving power and a stiffness control signal according to the vibration information of the controller to the stiffness controller D. The deep hole drill 1000 may machine the workpiece by rotating the workpiece, in a fixed state, or alternatively the workpiece in a fixed state may be machined by rotating the deep hole drill.

When the deep hole drill 1000 rotates, the signal transmitter 300 may be a slip ring for stably connecting the rotating drill head 100 and drill body 200 with a fixed controller.

Since a conventional drill head for deep hole drilling can be applied as the drill head 100, a detailed description thereof will be omitted.

The drill body 200 includes a support rod 210 having a front end connected to the drill head 100 and a rear end connected to the slip ring 300, and the support rod 210 has a hollow portion 220 along the axial direction. Through the hollow portion 220, cutting oil is supplied to the drill head 100, and chips generated from the workpiece due to drilling machining are discharged. Also, a vibration detection sensor 250 for detecting the vibration of the drill head 100 and transmitting the vibration to the controller is provided on the drill body 200. The vibration detection sensor 250 may be a three-dimensional acceleration sensor capable of detecting both axial and radial vibrations of the drill head 100. The vibration detection sensor 250 may be provided close to the drill head 100 so as to sensitively detect the vibration generated in the drill head 100. That is, the vibration detection sensor 250 may be installed into the front side of the drill body 200.

The stiffness controller D may be formed in a cylindrical shape, may have a predetermined width along the axial direction, and may be configured to surround the drill body 200 along the circumferential direction of the drill body 200. Here, the drill body 200 includes a stiffness control coupling portion 211 which has an axial length corresponding to the stiffness controller D, on the drill body 200 lest the stiffness controller D should protrude outward in the radial direction of the drill body 200. The stiffness control coupling portion 211 is formed to be recessed inwardly from the outer surface of the drill body 200 by the radial thickness of the stiffness controller D. Therefore, when the stiffness controller D is coupled to the stiffness control coupling portion 211, the outer surface height of the stiffness controller D may be configured to be the same as the outer surface height of the drill body 200. The stiffness controller D may be configured to vary the stiffness of the drill through a control signal of the controller, and may be, for example, an MR damper using a magneto-rheological (MR) fluid.

Fig. 2 is a cross sectional view of a deep hole drilling system 2000 (hereinafter, referred to as deep hole drill) which has a three-dimensional vibration damping function according to a second embodiment of the present invention.

As shown, the deep hole drill 2000 includes the drill head 100 which comes in contact with a workpiece and machines the workpiece by a rotational friction force, the drill body 200 which is coupled to a rear end of the drill head 100 to support the drill head 100, and the stiffness controller D which is provided on the drill body 200 and damps the axial and radial vibrations applied to the drill head 100 and the drill body 200 by varying the stiffness control of the drill body 200, i.e., the strength of the drill body 200. Also, a signal transmitter 400 is included at the rear end of the drill body 200. The signal transmitter 300 transmits a vibration information signal of the drill head 100 to the controller (not shown) and transmits a driving power and a stiffness control signal according to the vibration information of the controller to the stiffness controller D.

Here, unlike the first embodiment described above, the signal transmitter 400 of the deep hole drill 2000 according to the second embodiment of the present invention may be a non-contact wireless module for stably connecting the rotating drill head 100, the drill body 200, and a fixed controller. That is, the signal transmitter 400 includes a first transmitter and a second transmitter. The first transmitter is provided on the drill body 200, rotates together with the drill body 200, and is signally connected to the vibration detection sensor and the stiffness controller. The second transmitter is disposed on the outer surface of the first transmitter, is fixedly arranged regardless of the rotation of the first transmitter, and is signally connected to the controller, so that the second transmitter transmits a vibration detection signal of the first transmitter to the controller and transmits a stiffness control signal of the controller to the first transmitter.

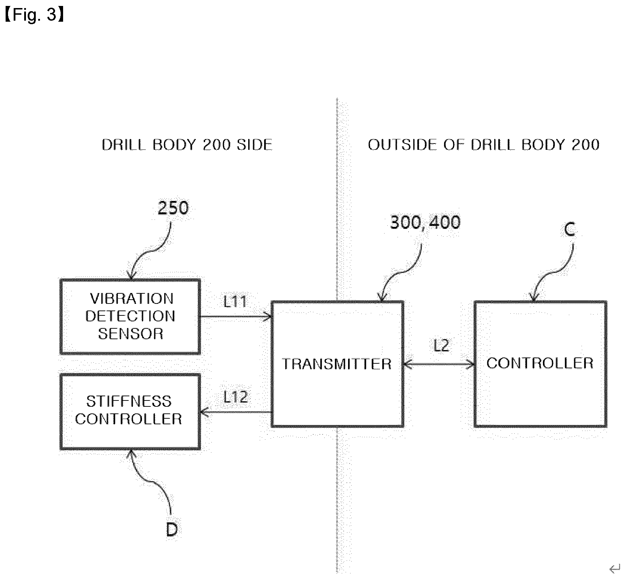

Fig. 3 is a block diagram showing signal lines of the deep hole drilling system according to the embodiment of the present invention. As shown, on the drill body 200, the vibration detection sensor 250 for detecting the vibration of the drill head 100 and the stiffness controller D for damping the vibration of the drill head 100 are provided, and the transmitters 300 and 400 for transmitting a vibration signal to the controller and for transmitting the stiffness control signal to the controller. Also, the vibration detection sensor 250 and the transmitters 300 and 400 are connected via a 1-1 line L11, and the stiffness controller D and the transmitters 300 and 400 are connected via a 1-2 line L12. Also, the transmitters 300 and 400 and the controller C are connected via a second line L2. Accordingly, the 1-1 line L11 and the 1-2 line L12 are provided on the drill body 200, and the second line L2 may be provided on the outside of the drill body 200.

The deep hole drills 1000 and 2000 having the configuration mentioned above according to the first or second embodiment can effectively damp the vibration generated from the drill head 100 by varying the strength of the drill head 100 as the stiffness controller D is provided on the drill body 200, and in particular, can effectively damp not only the width direction vibration but also the radial vibration of the drill head 100. Also, the deep hole drills 1000 and 2000 can monitor in real time the magnitude or direction of the vibration generated from the drill head 100 by using an acceleration sensor, and for the purpose of generating a damping force corresponding thereto, more effectively damps the vibration generated from the drill head 100 by controlling the viscosity of MR fluid of the stiffness controller D.

Therefore, the deep hole drilling system having a three-dimensional vibration damping function using stiffness control of a tool in accordance with the embodiment of the present invention controls the stiffness of the drill body 200 to reduce the vibration generated between a machining portion and the drill body 200 during the drilling machining. Accordingly, the precision of the machining portion is improved, resulting in excellent surface roughness and tolerance precision of the workpiece.

Hereinafter, the detailed configuration and various embodiments of the stiffness controller D of the deep hole drills 1000 and 2000 having the configuration described above will be described in detail with reference to the drawings.

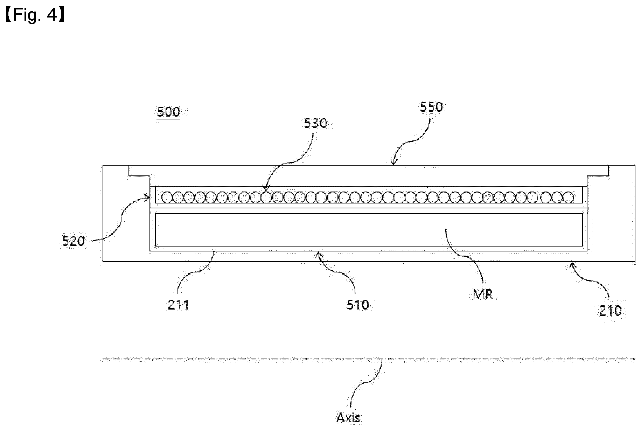

Fig. 4 is a cross-sectional view of a stiffness controller 500 according to the first embodiment of the present invention. The cross section of the stiffness controller 500 is made symmetrically along the radial direction with respect to the axis. Therefore, for convenience, only one stiffness controller 500 with respect to the axis will be shown and described.

As shown, the stiffness controller 500 includes an MR chamber 510 which is disposed on the radially innermost side of the support rod 210 and in which MR fluid (MR) is stored, a bobbin 520 which is disposed on the radially outer side of the MR chamber 510 and around which a coil 530 for controlling the viscosity of the MR fluid (MR) is wound, and a cover 550 which is provided on the radially outer side of the bobbin 520 and seals an open surface of the stiffness control coupling portion 211. In the stiffness controller 500 having the above configuration, the strength of magnetism applied to the MR fluid (MR) may be varied by the current applied to the coil 530, and accordingly, the viscosity of the MR fluid (MR) may be varied. Also, the stiffness (strength) of the MR chamber 510 may vary according to the variation in the viscosity of the MR fluid (MR).

Therefore, when vibration occurs in the drill head 100, the strength is varied by the variation of the MR fluid viscosity of the MR chamber 520 of the stiffness controller 500 provided on the drill body 200, so that a damping force corresponding to the vibration varying in real time in the drill head 100 is generated, and thus, the vibration is effectively reduced.

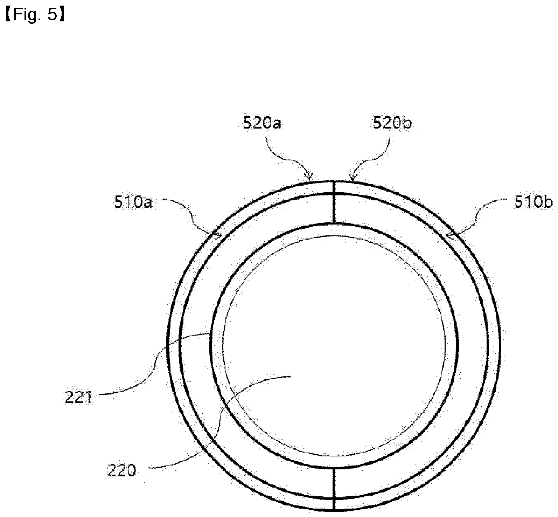

Fig. 5 is a partially sectional view of the deep hole drill 1000 in a radial direction thereof according to the embodiment of the present invention. The MR chamber 510 and the bobbin 520 of the stiffness controller 500 of the present invention may be configured in the following form in such a way as to be easily coupled to the cylindrical support rod 210. That is, a plurality of the MR chambers 510 and a plurality of the bobbins 520 may be configured such that they are radially separated with respect to a rotational axis, and form a cylindrical shape when they are combined. Although two MR chambers 510a and 510b and two bobbins 520a and 520b are shown as being combined in the drawing, three or more MR chambers and bobbins may be separately formed and combined. Also, although not shown in the drawing, a plurality of the covers 550 may also be separated and combined in such a way as to correspond to the MR chambers 510a and 510b and the bobbins 520a and 520b. Also, although the plurality of MR chambers 510a and 510b and the bobbins 520a and 520b are shown as having the same shape, when three or more MR chambers and bobbins are provided, any one may be formed to have a longer circumferential length than those of the other two. However, any one having the greatest circumferential length may not exceed half of the circumferential length of the support rod 210.

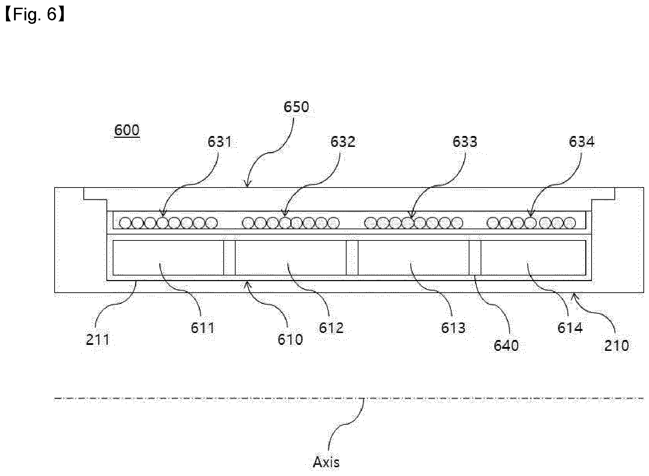

Fig. 6 is a cross-sectional view of a stiffness controller 600 according to the second embodiment of the present invention. The cross section of the stiffness controller 600 is made symmetrically along the radial direction with respect to the axis. Therefore, for convenience, only one stiffness controller 600 with respect to the axis will be shown and described.

In the stiffness controller 500 of the first embodiment described above, when the stiffness controller 500 has a long axial length, that is, when the axial length of the MR chamber is increased, the MR fluid (MR) may be drawn to one side. Therefore, in the stiffness controller 600 according to the second embodiment of the present invention, at least one first partition wall 640 may be formed such that an MR chamber 610 can be divided into a plurality of MR chamber spaces 611 to 614 along the axial direction. The first partition wall 640 may be formed on the MR chamber 610 along the radial direction and a plurality of the first partition walls 640 may be formed to be spaced apart from each other along the axial direction. As such, as the MR chamber 610 forms the plurality of MR chamber spaces 611 to 614 along the axial direction, even if the axial length of the MR chamber 610 increases, the MR fluid (MR) is prevented from being drawn to one side, so that there is an effect that precise stiffness control is possible in the entire area of the chamber 610. Here, a coil 630 which controls the viscosity of the MR fluid (MR) may also be divided into first to fourth coils 631 to 634 in such a way as to correspond to the MR chamber spaces 611 to 614, respectively, and each of the first to fourth coils 631 to 634 may be configured to be independently controlled by the controller. As such, when each coil is independently controlled by the controller, the viscosity of the MR fluid received in each of the MR chamber spaces 611 to 614 can also be independently controlled. Therefore, it is possible to configure to more efficiently damp the vibration depending on whether the vibration is generated in the axial direction or in the radial direction. For example, when the vibration is generated in the axial direction, it is possible to improve a vibration damping efficiency in the axial direction by configuring that the viscosity of the MR fluid becomes lower as a distance from the motor drill 100 is increased, and when the vibration is generated in the radial direction, it is possible to improve the vibration damping efficiency in the radial direction by configuring that all viscosities of the MR fluid received in the MR chamber spaces 611 to 614 is made to be the same as each other. Also, it is also possible to configure that the viscosity of the MR fluid in the MR chamber space requiring a strong damping force among the MR chamber spaces 611 to 614 becomes stronger and the viscosity of the MR fluid becomes lower as a distance from the chamber space is increased.

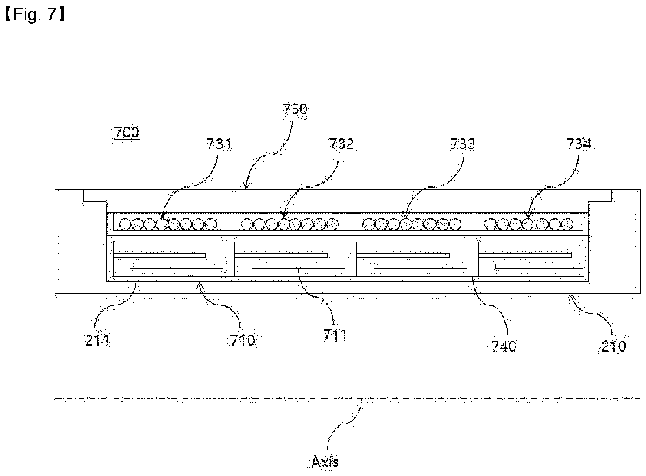

Fig. 7 is a cross-sectional view of a stiffness controller 700 according to a third embodiment of the present invention. The cross section of the stiffness controller 700 is made symmetrically along the radial direction with respect to the axis. Therefore, for convenience, only one stiffness controller 700 with respect to the axis will be shown and described.

In the stiffness controller 500 of the first embodiment described above, when the drill body 200 is rotated, the MR fluid may be drawn to the radially outer side of the drill body. Therefore, in the stiffness controller 700 according to the third embodiment of the present invention, an MR chamber 710 may be divided into a plurality of MR chamber spaces along the axial direction and at least one baffle 711 may be formed along the axial direction. An axial one side or the other side of the baffle 711 is coupled to the MR chamber 710 or a first partition wall 740, and the other side is spaced apart from the MR chamber 710 or the first partition wall 740 by a predetermined distance, so that a space through which the MR fluid can flow is formed. This intends to prevent the MR fluid from being drawn to the radially outer side and to allow the MR fluids received in one chamber space to communicate with each other so that the viscosity control by a coil can be constantly maintained. This is because, in the case where the MR fluid is completely divided in the radial direction, a viscosity difference may occur between the MR fluids divided along the radial direction when the viscosity is controlled by the coil. That is, this is because while the viscosities can be controlled to be equal to each other through the current control by the coils 731 to 734 corresponding respectively to the MR fluids divided in the axial direction, the viscosities of the MR fluids divided along the radial direction cannot be controlled to be equal to each other by one coil 731, 732, 733 or 734.

A plurality of the baffles 711 may be disposed to be spaced apart from each other in the radial direction. In this case, when a space is formed on the other side of one of the baffles in the axial direction, another adjacent baffle may be formed to alternate with each other such that a space is formed on one side in the axial direction.

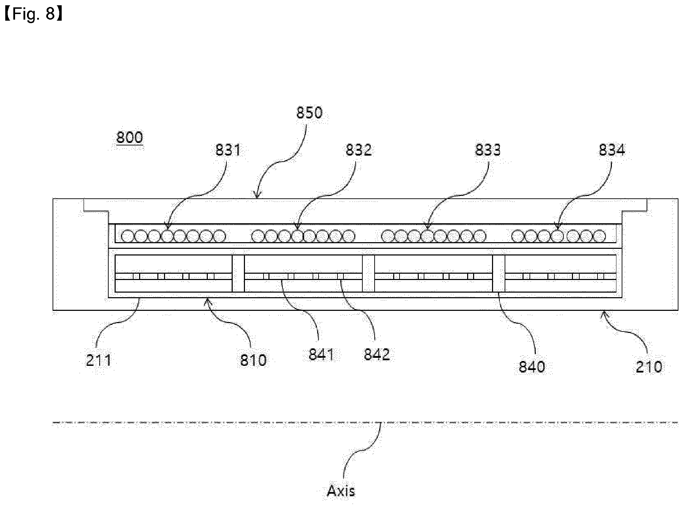

Fig. 8 is a cross-sectional view of a stiffness controller 800 according to a fourth embodiment of the present invention. The cross section of the stiffness controller 800 is made symmetrically along the radial direction with respect to the axis. Therefore, for convenience, only one stiffness controller 800 with respect to the axis will be shown and described.

In the stiffness controller 500 of the first embodiment described above, when the drill body 200 is rotated, the MR fluid may be drawn to the radially outer side of the drill body. Therefore, in the stiffness controller 800 according to the fourth embodiment of the present invention, an MR chamber 810 may be divided into a plurality of MR chamber spaces along the axial direction and at least one second partition wall 841 may be formed along the axial direction.

Both ends of the second partition wall 841 are coupled to the MR chamber 810 or a first partition wall 840 and divide the MR chamber 810 into a plurality of chambers along the radial direction. Here, at least one flow hole 842 is formed on the second partition wall 841, and a space through which the MR fluid can flow is formed. This intends to prevent the MR fluid from being drawn to the radially outer side and to allow the MR fluids received in one chamber space to communicate with each other so that the viscosity control by a coil can be constantly maintained.

The spirit of the present invention should not be construed as being limited to the foregoing embodiments. The present invention has a wide range of applications and various changes can be made by those skilled in the art to which the present invention belongs without departing from the spirit of the present invention as defined by the appended claims. Accordingly, such improvements and changes are apparent to those skilled in the art and belong to the range of protection of the present invention.

**REERENCE NUMERALS**

| | | | |
|---|---|---|---|
| 1000, 2000: | Deep hole drill | | |
| 100: | Drill head | | |
| 200: | Drill body | | |
| 210: | Support rod | 211: | Stiffness control coupling portion |
| 220: | Hollow portion | 250: | Vibration detection sensor |
| 300, 400: | Transmitter | | |
| D, 500, 600, 700, 800: | Stiffness controller | | |
| 510, 610, 710, 810: | MR chamber | | |
| 611, 612, 613, 614: | MR chamber space | | |
| 711: | Baffle | | |
| 520, 620, 720, 820: | Bobbin | | |
| 530, 630, 730, 830: | Coil | | |
| 640, 740, 840: | First partition wall | | |
| 550, 650, 750, 850: | Cover | | |
| MR: | MR fluid | | |
| 841: | Second partition wall | | |
| 842: | Flow hole | | |

## Claims

1. A deep hole drilling system in which a drill head which machines a workpiece by a rotational friction force is formed at a front end thereof and a drill body having a predetermined length along an axial direction is formed at a rear end thereof, the deep hole drilling system which has a three-dimensional vibration damping function using stiffness control of a tool and comprises:
a vibration detection sensor which is provided on the drill body and detects vibration of the drill head;
a stiffness controller which is provided on the drill body, controls stiffness of the drill body, and thus, damps the vibration; and
a controller which receives a vibration signal of the vibration detection sensor, transmits a stiffness control signal corresponding to the vibration signal to the stiffness controller, and varies a strength of the stiffness controller.

2. The deep hole drilling system of claim 1,
wherein the stiffness controller is formed in a cylindrical shape which has a predetermined length along the axial direction and a predetermined thickness along a radial direction, and surrounds an outer surface of the drill body,
and wherein the drill body comprises a stiffness control coupling portion being formed to be recessed radially inwardly from the outer surface of the drill body lest an outer surface of the stiffness controller should protrude outward from the outer surface of the drill body and having a length corresponding to the stiffness controller and a thickness corresponding to the stiffness controller.

3. The deep hole drilling system of claim 1,
wherein the stiffness controller comprises:
an MR chamber which is disposed radially inward and in which a MR fluid (MR) is stored;
a bobbin which is disposed on a radially outer side of the MR chamber; and
a coil which is wound around the bobbin in order to control a viscosity of the MR fluid (MR),
and wherein the controller controls stiffness of the stiffness controller by controlling an intensity of a current applied to the coil.

4. The deep hole drilling system of claim 3, wherein the stiffness controller comprises at least one first partition wall is formed such that the MR chamber is divided into a plurality of MR chamber spaces along the axial direction.

5. The deep hole drilling system of claim 4, wherein the coil is divided into a plurality of coils in such a way as to correspond to the MR chamber spaces, respectively, and each of the coils is independently controlled by the controller.

6. The deep hole drilling system of claim 4, wherein the MR chamber comprises at least one baffle which is formed along the axial direction, of which axial one side or the other side is coupled to the MR chamber or the first partition wall, and of which the other side is spaced apart from the MR chamber or the first partition wall.

7. The deep hole drilling system of claim 6, wherein a plurality of the baffles are disposed to be spaced apart from each other in the radial direction, and wherein, when a space is formed on the other side of one of the baffles in the axial direction, another adjacent baffle is formed to alternate with each other such that a space is formed on one side in the axial direction.

8. The deep hole drilling system of claim 4,
wherein the MR chamber comprises a second partition wall which is formed along the axial direction such that the MR chamber space is divided into a plurality of MR chamber spaces along the radial direction,
and wherein at least one flow hole is formed on the second partition wall.

9. The deep hole drilling system of claim 1, further comprising a transmitter which transmits the vibration signal of the vibration detection sensor to the controller and transmits the stiffness control signal of the controller to the stiffness controller.

10. The deep hole drilling system of claim 9,
wherein the controller is disposed on an outside of the rotating drill body,
and wherein the transmitter comprises a slip ring which connects the stiffness controller and the vibration detection sensor provided on the rotating drill body, and a fixed controller.

11. The deep hole drilling system of claim 9,
wherein the controller is disposed on an outside of the rotating drill body,
and wherein the transmitter comprises a wireless transmission module connecting the stiffness controller and the vibration detection sensor provided on the rotating drill body, and a fixed controller, and comprises a first transmitter which is provided on the drill body and rotates together with the drill body, and a second transmitter which is disposed close to the first transmitter and wirelessly communicates with the first transmitter.

12. The deep hole drilling system of claim 4, wherein, in the MR chamber space, the MR chamber space disposed at the rear end has a smaller volume than that of the MR chamber space disposed at the front end.

13. The deep hole drilling system of claim 1, wherein the stiffness controller is disposed on a front side of the drill body.

14. The deep hole drilling system of claim 1, wherein the drill body comprises a hollow portion formed therein along the axial direction so as to supply cutting oil to the drill head and discharge chips generated between the drill head and a workpiece, so that flow paths are formed therein respectively.
